# EUROPÄISCHE PATENTANMELDUNG

(11) **EP 3 045 282 A1**
(43) Veröffentlichungstag der Anmeldung: **20.07.2016**
(21) Anmeldenummer: 16150765.2
(22) Anmeldetag: 11.01.2016
(51) Int. Cl.: B28D 1/04, B28D 7/04, B23D 47/02, B23D 45/02

(54) **SCHNEIDVORRICHTUNG**

(30) Priorität: 13.01.2015 DE 202015100109 U
(71) Anmelder: Englhard, Hermann, 83370 Seeon/Chiemsee (DE)
(72) Erfinder: Englhard, Hermann, 83370 Seeon/Chiemsee (DE)
(74) Vertreter: Tetzner, Michael

(57) **Zusammenfassung**

Eine Schneidvorrichtung mit
- einer Auflagefläche für ein zu schneidendes Element,
- einer Führungsschiene (8),
- einem an der Führungsschiene (8) geführten Laufwagen (7),
- einem an dem Laufwagen (7) gehaltenen Schneidwerkzeug (5) zum Schneiden des Elements und
- einer Schwenkvorrichtung zum Schwenken des Schneidwerkzeugs (5),

ist dadurch gekennzeichnet, dass die Auflagefläche längs der Führungsschiene (8) in eine erste Teilauflagefläche (3) und eine zweite Teilauflagefläche (11) unterteilt ist, wobei die zweite Teilauflagefläche (11) mit der Schwenkvorrichtung zum gemeinsamen Verschwenken mit dem Schneidwerkzeug (5) relativ zu der ersten Teilauflagefläche (3) gekoppelt ist.

## Beschreibung

Die Erfindung betrifft eine Schneidvorrichtung mit einer Auflagefläche für ein zu schneidendes Element, wie beispielsweise eine Fliese, mit einer Führungsschiene, einem an der Führungsschiene geführten Laufwagen, einem an dem Laufwagen gehaltenen Schneidwerkzeug zum Schneiden des Elements und einer Schwenkeinrichtung zum Schwenken des Schneidwerkzeugs.

Derartige Schneidvorrichtungen ermöglichen durch die Führung des Schneidwerkzeugs an der Führungsschiene ein Schneiden, d.h. Ritzen oder Durchtrennen, mit exakt geraden Schneidkanten, wodurch das optische Erscheinungsbild der so beschnittenen Elemente positiv beeinflusst wird. Dabei sind eine Vielzahl von Schneidvorrichtungen derart ausgebildet, dass das Schneidwerkzeug lediglich entlang der Längsrichtung der Führungsschiene und damit entlang der vorgesehenen Schneidlinie sowie gegebenenfalls senkrecht dazu und zu der Oberfläche des zu schneidenden Elements bewegt werden kann. Demnach ergeben sich für flächige Elemente, wie beispielsweise Fliesen, Schnittflächen, die zu den Großflächen der Elemente senkrecht ausgerichtet sind. Bekannt sind aber auch Schneidvorrichtungen, bei denen das Schneidwerkzeug derart schwenkbar ist, dass sich schräge Ausrichtungen der Schnittflächen bezüglich der Großflächen ergeben.

Der Erfindung hat die Aufgabe zugrunde gelegen, eine konstruktiv möglichst einfach ausgebildete und/oder einfach zu handhabende Schneidvorrichtung mit schwenkbarem Schneidwerkzeug anzugeben.

Diese Aufgabe wird mittels einer Schneidvorrichtung gemäß dem Patentanspruch 1 gelöst. Vorteilhafte Ausgestaltungen davon sind Gegenstände der abhängigen Patentansprüche und ergeben sich aus der nachfolgenden Beschreibung der Erfindung.

Eine gattungsgemäße Schneidvorrichtung, die zumindest
- eine Auflagefläche für ein zu schneidendes, insbesondere plattenförmiges Element,
- eine Führungsschiene,
- einen an der Führungsschiene geführten Laufwagen,
- ein an dem Laufwagen gehaltenes Schneidwerkzeug zum Schneiden (Ritzen oder Durchtrennen) des Elements und
- eine Schwenkvorrichtung zum Schwenken des Schneidwerkzeugs, umfasst, ist erfindungsgemäß dadurch gekennzeichnet, dass die Auflagefläche längs (und vorzugsweise parallel zu) der Führungsschiene in eine erste Teilauflagefläche und eine zweite Teilauflagefläche unterteilt ist, wobei die zweite Teilauflagefläche (direkt oder indirekt) mit der Schwenkvorrichtung zum gemeinsamen Schenken mit dem Schneidwerkzeug relativ zu der ersten Teilauflagefläche gekoppelt ist.

Durch die erfindungsgemäße Zweiteilung der Auflagefläche und das an ein Schwenken des Schneidwerkzeugs gekoppelte Schwenken der zweiten Teilauflagefläche können mehrere Vorteile realisiert werden. Zum einen kann dadurch erreicht werden, dass ein oder mehrere Bauteile der Schneidvorrichtung bei einem Schwenken des Schneidwerkzeugs und der damit gekoppelten zweiten Teilauflagefläche aus einer Ausgangsstellung heraus, in der die zweite Teilauflagefläche in einer in etwa koplanaren Ausrichtung bezüglich der ersten Teilauflagefläche angeordnet und die Richtung der Schneidwirkung des Schneidwerkzeugs und damit die durch dieses in das Element eingebrachte Schnittebene vorzugsweise senkrecht zu einer Oberfläche des zu schneidenden Elements (im zu schneidenden Bereich) ist, in denjenigen Bereich bewegt werden kann, in dem die zweite Teilauflagefläche in der Ausgangsstellung angeordnet ist. Es ist somit nicht erforderlich, die zweite Teilauflagefläche für ein Schwenken des Schneidwerkzeugs zu entfernen. Zudem kann durch die erfindungsgemäße Ausgestaltung der Schneidvorrichtung eine gute Sicht auf das zu schneidende Element bei aus der Ausgangsstellung heraus geschwenktem Schneidwerkzeug erreicht werden

Das zu schneidende Element kann insbesondere aus Naturstein oder Keramik ausgebildet sein. Bevorzugt handelt es sich bei dem zu schneidenden Element um eine Fliese aus beliebigem Material.

Das Schneidwerkzeug kann statisch, d.h. für den Schneidvorgang unbeweglich bezüglich des Laufwagens, oder dynamisch, d.h. für den Schneidvorgang beweglich bezüglich des Laufwagens, ausgebildet sein. Bei einem dynamischen Schneidwerkzeug kann dieses insbesondere durch einen motorischen Schneidwerkzeugantrieb angetrieben sein. Die Antriebsbewegung des Schneidwerkzeugs kann dabei insbesondere rotierend sein, wobei auch zyklische hin-und-her-Bewegungen möglich sein können.

In einer konstruktiv vorteilhaften Ausgestaltung der erfindungsgemäßen Schneidvorrichtung kann vorgesehen sein, dass die Schwenkeinrichtung zum gemeinsamen Verschwenken von Führungsschiene, Laufwagen und Schneidwerkzeug (und weiterhin bevorzugt auch eines Schneidwerkzeugantriebs, soweit vorgesehen) ausgebildet ist.

Weiterhin bevorzugt kann vorgesehen sein, dass die Schwenkeinrichtung um eine Schwenkachse schwenkbar bezüglich der ersten Teilauflagefläche ist, die in der Schnittebene des Schneidwerkzeugs liegt, weil dadurch erreicht werden kann, dass sich die durch das Schneidwerkzeug in das zu schneidende Element einzubringende Schnittlinie in den verschiedenen, durch das Schwenken ermöglichten Winkelstellungen des Schneidwerkzeugs möglichst nicht oder nur geringfügig verlagert.

Die erfindungsgemäße Schneidvorrichtung kann weiterhin einen Auflagetisch mit einem die erste Teilauflagefläche tragenden Tischrahmen aufweisen, wobei die Schwenkvorrichtung zudem einen Schwenkrahmen umfassen kann, der schwenkbar an dem Tischrahmen gehalten ist und die Führungsschiene nebst Laufwagen und Schneidwerkzeug (und gegebenenfalls einen Schneidwerkzeugantrieb) sowie die zweite Teilauflagefläche trägt. Der Auflagetisch kann daneben noch ein Gestell umfassen, durch das der Tischrahmen und damit die Auflagefläche in einem definierten Abstand zu einem Untergrund, auf dem die Schneidvorrichtung abgestellt ist, positioniert ist. Dadurch wird nicht nur ein für einen Bediener der Schneidvorrichtung komfortables Handhaben der Schneidvorrichtung und eines zu schneidenden Elements sondern auch ein Hineinbewegen von schwenkbaren Komponenten der Schneidvorrichtung beim Schwenken des Schneidwerkzeugs in den zwischen der Auflagefläche und dem Untergrund ausgebildeten Freiraum ermöglicht.

Um eine Ausbildung von möglichst exakten schrägen Schneidflächen in dem zu schneidenden Element zu gewährleisten kann die erfindungsgemäße Schneidvorrichtung vorteilhafterweise eine Arretiervorrichtung zur Fixierung des Schwenkrahmens in einer definierten Winkelstellung relativ zu dem Tischrahmen aufweisen. Dabei kann die Arretiervorrichtung vorteilhafterweise durch ein an dem Tischrahmen oder der Schwenkvorrichtung befestigtes Klemmmittel ausgebildet sein, das klemmend auf einen Abschnitt der Schwenkvorrichtung oder des Tischrahmens (d.h. die jeweils andere Komponente) wirken kann, ausgebildet sein. Anstelle von oder zusätzlich zu einem kraftschlüssig wirkenden Klemmmittel kann die Arretiervorrichtung auch ein formschlüssig wirkendes Arretiermittel umfassen.

In einer vorteilhaften Weiterbildung einer solchen Schneidvorrichtung kann dann noch vorgesehen sein, dass das Klemmmittel durch ein bogenförmig um die Schwenkachse umlaufendes Langloch der Schwenkvorrichtung (und insbesondere des Schwenkrahmens) oder des Tischrahmens geführt ist. Dadurch kann auf konstruktiv einfache Weise erreicht werden, dass der Tischrahmen und die Schwenkvorrichtung (insbesondere der Schwenkrahmen) zur klemmenden Halterung der Schwenkvorrichtung in einer definierten Winkelstellung mittels des Klemmmittels gegeneinander gedrückt werden. Zudem können dann die längsaxialen Enden des Langlochs vorteilhafterweise als Endanschläge für die Schwenkbarkeit der Schwenkvorrichtung dienen.

In einer weiterhin bevorzugten Ausgestaltung der erfindungsgemäßen Schneidvorrichtung kann vorgesehen sein, dass die Schwenkvorrichtung mittels eines Rückstellelements in Richtung einer koplanaren Ausrichtung der ersten Teilauflagefläche und der zweiten Teilauflagefläche beaufschlagt oder zumindest beaufschlagbar ist. Dabei kann die Wirkung des Rückstellelements insbesondere einer (zumindest teilweisen) Kompensation eines Moments, das durch die Gewichtskraft des schwenkbaren Teils der Schneidvorrichtung um die Schwenkachse erzeugt wird, dienen.

In einer konstruktiv einfachen Ausgestaltung der erfindungsgemäßen Schneidvorrichtung kann vorgesehen sein, dass das Rückstellelement als Federelement (z.B. Schraubenfeder oder Gasdruckfeder) ausgebildet ist. Dabei kann weiterhin bevorzugt vorgesehen sein, dass die Vorspannung des Federelements derart bemessen ist, dass dieses die (ansonsten unbelastete) Schwenkvorrichtung in der koplanaren Ausrichtung der ersten Teilauflagefläche und zweiten Teilauflagefläche hält beziehungsweise die Schwenkvorrichtung selbsttätig aus einer geschwenkten Stellung in die koplanare Ausrichtung zurück bewegt. Somit kann insbesondere vorgesehen sein, dass der schwenkbare Teil der Schneidvorrichtung für ein Schwenken aus der Ausgangsstellung heraus manuell oder durch einen motorischen Schwenkantrieb belastet werden muss, während ein Zurückstellen in die Ausgangsstellung bei nicht mehr andauernder Belastung (und nicht wirksamer Arretiervorrichtung) selbsttätig infolge der rückstellenden Wirkung der Rückstellvorrichtung erfolgen kann.

Die unbestimmten Artikel ("ein", "eine", "einer und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: eine erfindungsgemäße Schneidvorrichtung in einer perspektivischen Ansicht;
- Fig. 2:: den in der Fig. 1 mit II gekennzeichneten Ausschnitt in vergrößerter Darstellung;
- Fig. 3:: in einer Seitenansicht die Schneidvorrichtung mit der Schwenkvorrichtung in der Ausgangsstellung; und
- Fig. 4:: in einer Seitenansicht die Schneidvorrichtung mit der Schwenkvorrichtung in einer verschränkten Stellung.

Die in den Zeichnungen dargestellte Schneidvorrichtung umfasst einen Auflagetisch mit einem Tischrahmen 2, in dem eine erste Teilauflagefläche 3 einer Auflagefläche der Schneidvorrichtung (lösbar oder unlösbar) gehalten ist. Weiterhin umfasst der Auflagetisch 1 ein vier Tischbeine 4 umfassendes Gestell, mittels dessen die Schneidvorrichtung auf einem Untergrund abstellbar ist, wobei der Tischrahmen 2 und damit die Auflagefläche in einem definierten Abstand zu dem Untergrund positioniert ist.

Die Schneidvorrichtung umfasst weiterhin ein als Kreissägeblatt ausgebildetes Schneidwerkzeug 5, das rotierend mittels eines elektromotorischen Schneidwerkzeugantriebs 6 antreibbar ist. Der Schneidwerkzeugantrieb 6 und damit das Schneidwerkzeug 5 sind an einem Laufwagen 7 befestigt, der wiederum an einer Führungsschiene 8 entlang bewegbar ist. Im vorliegenden Ausführungsbeispiel erfolgt ein solches Bewegen des Laufwagens 7 entlang der Führungsschiene 8 manuell. Grundsätzlich möglich ist jedoch auch ein motorisch angetriebenes Bewegen des Laufwagens 7 entlang der Führungsschiene 8.

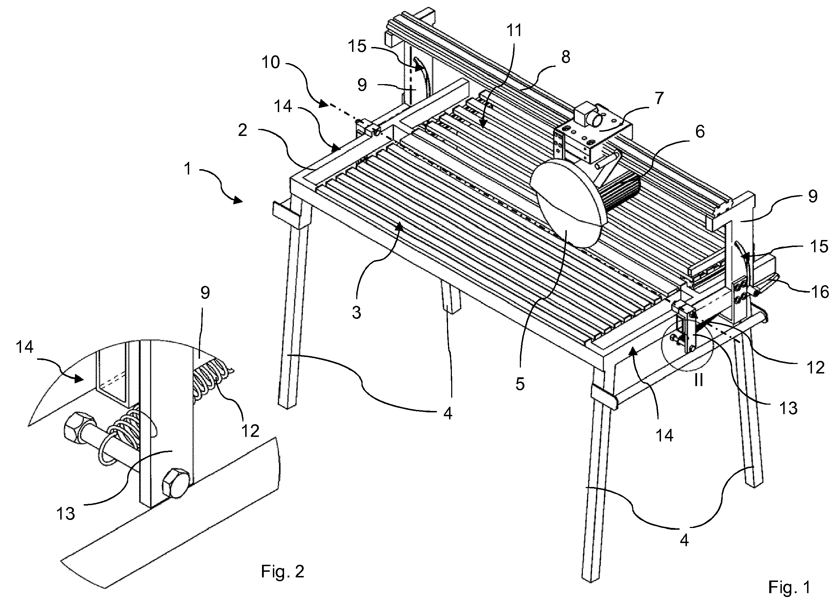

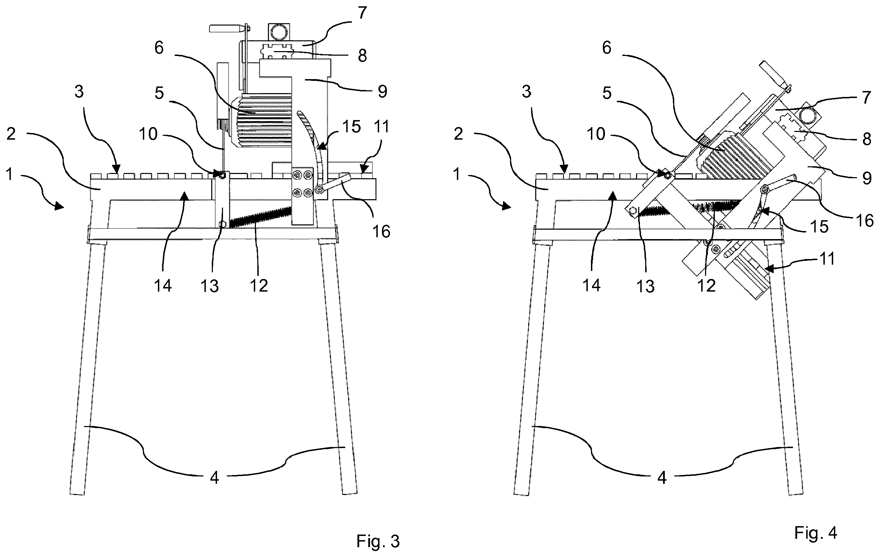

Die Führungsschiene 8 ist im Bereich ihrer beiden Enden mit einem aus zwei Teilrahmen 9 bestehenden Schwenkrahmen verbunden, wobei die beiden Teilrahmen 9 jeweils schwenkbar um eine gemeinsame Schwenkachse 10 mit dem Tischrahmen 2 verbunden sind. Diese Schwenkachse 10 liegt dabei (im Wesentlichen unabhängig von der jeweiligen Winkelstellung des schwenkbaren Schneidwerkzeugs 5) in etwa in der von dem Schneidwerkzeug 5 definierten Schnittebene und zudem seitlich neben der ersten Teilauflagefläche 3. Ebenfalls mit den beiden Teilrahmen 9 des Schwenkrahmens verbunden ist eine zweite Teilauflagefläche 11 der Auflagefläche, die in einer Ausgangsstellung der u.a. durch den Schwenkrahmen und dessen Schwenklagerung an dem Tischrahmen 2 gebildeten Schwenkvorrichtung, wie sie in den Fig. 1 und 3 gezeigt ist, in einer in etwa koplanaren Ausrichtung mit der ersten Teilauflagefläche 3 angeordnet ist. In dieser Ausgangsstellung ist die durch das Schneidwerkzeug 5 definierte Schnittebene zudem in etwa senkrecht zu der Oberseite der Auflagefläche ausgerichtet.

Durch die schwenkbare Befestigung des Schwenkrahmens an dem Tischrahmen 2 kann die Schwenkvorrichtung (u.a. Schwenkrahmen mit Schwenklagerung, Laufwagen 7 und Führungsschiene 8) einschließlich der von dieser getragenen Komponenten (Schneidwerkzeug 5 und Schneidwerkzeugantrieb 6) der Schneidvorrichtung aus der in den Fig. 1 und 3 dargestellten Ausgangsstellung um die Schwenkachse 10 bis zu einem Erreichen der in der Fig. 4 dargestellten Endstellung geschwenkt werden, in der die durch das Schneidwerkzeug 5 definierte Schnittebene in etwa in einem Winkel von 45° relativ zu der Oberseite der ersten Teilauflagefläche 3 ausgerichtet ist.

Bei einem solchen Schwenken der Schwenkvorrichtung und der von dieser getragenen Komponenten der Schneidvorrichtung wird ein Federelement 12, das in Form einer Schraubenfeder ausgebildet ist und das bereits in der Ausgangsstellung der Schwenkvorrichtung vorgespannt ist, zunehmend vorgespannt. Dazu ist das Federelement 12 zwischen einem Anlenkhebel 13 der Schwenkvorrichtung und einem Abschnitt des Tischrahmens 2 abgestützt. Die Vorspannung des Federelements 12 in der Ausgangsstellung der Schwenkvorrichtung ist dabei so groß gewählt, dass die Schwenkvorrichtung durch die Rückstellwirkung des Federelements 12 trotz eines durch die Gewichtskraft der schwenkbaren Komponenten um die Schwenkachse 10 erzeugten Moments in der Ausgangsstellung gehalten wird, so dass für ein Schwenken aus der Ausgangsstellung heraus die Schwenkvorrichtung manuell in der entsprechenden Richtung belastet werden muss. Die bei dem Schwenken aus der Ausgangsstellung heraus zunehmende Vorspannung des Federelements 12 führt zudem zu einem selbsttätigen Zurückschwenken in die Ausgangsstellung, sofern die manuelle Belastung der Schwenkvorrichtung entsprechend reduziert wird und eine definierte Winkelstellung der Schwenkvorrichtung nicht durch die Wirkung einer Arretiervorrichtung der Schneidvorrichtung gesichert ist.

Diese Arretiervorrichtung umfasst zwei Bolzen, von denen jeweils einer außenseitig an einem Seitenteil 14 des Tischrahmens 2 befestigt ist und sich durch jeweils ein bogenförmig um die Schwenkachse 10 verlaufendes Langloch 15 des dazugehörigen Teilrahmens 9 des Schwenkrahmens erstreckt und an dem freien Ende mit jeweils einem Klemmhebel 16 zusammenwirkt. Durch eine (Teil-)Drehung der Klemmhebel 16 können diese durch beispielsweise die Wirkung einer Gewindeverbindung mit großer Steigung entlang der Längsrichtung der Bolzen bewegt werden, wodurch ermöglicht wird, mittels der Klemmhebel 16 die Teilrahmen 9 des Schwenkrahmens gegen die entsprechenden Abschnitte der Seitenteile 14 des Tischrahmens zu drücken, wodurch diese kraftschlüssig zueinander positioniert gehalten werden. Demnach ist es möglich, mittels der Arretiervorrichtung die Schwenkvorrichtung in jeder beliebigen Winkelstellung zwischen der Ausgangsstellung gemäß den Fig. 1 und 3 und der Endstellung gemäß der Fig. 4 zu fixieren. Dabei wird sowohl die Ausgangsstellung als auch die Endstellung durch ein Anschlagen der Bolzen an den entsprechenden Enden der Langlöcher 15 begrenzt.

### Bezugszeichenliste:

- 1.: Auflagetisch
- 2.: Tischrahmen
- 3.: erste Teilauflagefläche
- 4.: Tischbein
- 5.: Schneidwerkzeug
- 6.: Schneidwerkzeugantrieb
- 7.: Laufwagen
- 8.: Führungsschiene
- 9.: Teilrahmen
- 10.: Schwenkachse
- 11.: zweite Teilauflagefläche
- 12.: Federelement
- 13.: Anlenkhebel
- 14.: Seitenteil des Tischrahmens
- 15.: Langloch
- 16.: Klemmhebel

## Patentansprüche

1. Schneidvorrichtung mit
- einer Auflagefläche für ein zu schneidendes Element,
- einer Führungsschiene (8),
- einem an der Führungsschiene (8) geführten Laufwagen (7),
- einem an dem Laufwagen (7) gehaltenen Schneidwerkzeug (5) zum Schneiden des Elements und
- einer Schwenkvorrichtung zum Schwenken des Schneidwerkzeugs (5), **dadurch gekennzeichnet, dass** die Auflagefläche längs der Führungsschiene (8) in eine erste Teilauflagefläche (3) und eine zweite Teilauflagefläche (11) unterteilt ist, wobei die zweite Teilauflagefläche (11) mit der Schwenkvorrichtung zum gemeinsamen Verschenken mit dem Schneidwerkzeug (5) relativ zu der ersten Teilauflagefläche (3) gekoppelt ist.

2. Schneidvorrichtung nach Anspruch 1, **dadurch gekennzeichnet, dass** die Schwenkvorrichtung zum gemeinsamen Verschwenken von zweiter Teilauflagefläche (11), Führungsschiene (8), Laufwagen (7) und Schneidwerkzeug (5) ausgebildet ist.

3. Schneidvorrichtung nach Anspruch 1 oder 2, **dadurch gekennzeichnet, dass** die Schwenkvorrichtung eine Schwenkachse (10) aufweist, die in einer Schnittebene des Schneidwerkzeugs (5) liegt.

4. Schneidvorrichtung nach einem oder mehreren der vorhergehenden Ansprüche, **gekennzeichnet durch** einen Auflagetisch (1) mit einem die erste Teilauflagefläche (3) tragenden Tischrahmen (2) und einem Schwenkrahmen der Schwenkvorrichtung, wobei der Schwenkrahmen schwenkbar am Tischrahmen (2) gehalten ist und die Führungsschiene (8) nebst Laufwagen (7) und Schneidwerkzeug (5) sowie die zweite Teilauflagefläche (11) trägt.

5. Schneidvorrichtung nach Anspruch 4, **gekennzeichnet durch** eine Arretiervorrichtung zur Fixierung des Schwenkrahmens in einer definierten Winkelstellung relativ zu dem Tischrahmen (2).

6. Schneidvorrichtung nach Anspruch 5, **dadurch gekennzeichnet, dass** die Arretiervorrichtung durch ein an dem Tischrahmen (2) oder der Schwenkvorrichtung befestigtes Klemmmittel ausgebildet ist, das klemmend auf einen Abschnitt der Schwenkvorrichtung oder des Tischrahmens (2) wirken kann.

7. Schneidvorrichtung nach Anspruch 6, **dadurch gekennzeichnet, dass** das Klemmmittel durch ein bogenförmig um die Schwenkachse (10) umlaufendes Langloch (15) geführt ist.

8. Schneidvorrichtung nach einem oder mehreren der vorhergehenden Ansprüche, **dadurch gekennzeichnet, dass** die Schwenkvorrichtung mittels eines Rückstellelements in Richtung einer koplanaren Ausrichtung der ersten Teilauflagefläche (3) und der zweiten Teilauflagefläche (11) beaufschlagbar ist.

9. Schneidvorrichtung nach Anspruch 8, **dadurch gekennzeichnet, dass** das Rückstellelement als Federelement (12) ausgebildet ist.

10. Schneidvorrichtung nach Anspruch 9, **dadurch gekennzeichnet, dass** die Vorspannung des Federelements (12) derart bemessen ist, dass dieses die Schwenkvorrichtung in der koplanaren Ausrichtung der ersten Teilauflagefläche (3) und der zweiten Teilauflagefläche (11) hält.
